# EUROPEAN PATENT SPECIFICATION

(11) **EP 3 748 450 B1**
(45) Date of publication and mention of the grant of the patent: **03.07.2024**
(21) Application number: 20172243.6
(22) Date of filing: 30.04.2020
(51) Int. Cl.: G05B 23/02, G05B 17/02, G06N 20/00

(54) **DATA DRIVEN MACHINE LEARNING FOR MODELING AIRCRAFT SENSORS**
DATENGESTEUERTES MASCHINENLERNEN ZUR MODELLIERUNG VON FLUGZEUGSENSOREN
APPRENTISSAGE MACHINE COMMANDÉE PAR DES DONNÉES POUR LA MODÉLISATION DE CAPTEURS D'AÉRONEF

(30) Priority: 06.06.2019 US 201916433822
(43) Date of publication of application: 09.12.2020
(73) Proprietor: The Boeing Company, Arlington, VA 22202 (US)
(72) Inventor: BERESON, ANDREW LOUIS, Chicago, IL 60606-1596 (US); RIGDON, DEBRA ALICE, Chicago, IL 60606-1596 (US); SWAYNE, MICHAEL THOMAS, Chicago, IL 60606-1596 (US); NGUYEN, HIEU TRUNG, Chicago, IL 60606-1596 (US)
(74) Representative: Plasseraud IP

(56) References cited:
- US-A1- 2017 331 844
- US-A1- 2019 147 670

## Description

### BACKGROUND

This disclosure is generally related to state sensing and/or fault sensing, and in particular to using data driven machine learning for modeling aircraft sensors. Engineered systems, such as factories and machinery, and in particular aircraft and other vehicles, typically include many components and subsystems. These components may be serviced or replaced at regular intervals to ensure proper functioning of the system. On occasion, components and/or subsystems may degrade unexpectedly outside of their service schedule. These degraded components may be identified through logs, noticeable effects, troubleshooting, scheduled inspections, and/or other types of fault detection methods. These events may lead to unscheduled maintenance and significant costs.

Current solutions are typically manual in nature and include support from someone who is an expert on a particular subsystem under scrutiny. This approach is time-consuming, expensive, and may not anticipate problems sufficiently to prevent unscheduled downtime. Current methods of detecting degraded components and subsystems also tend to generate a large number of false positives as well as missed detections.

Machine learning techniques have been applied to particular subsystems to attempt to identify issues. However, current machine learning solutions are subsystem focused and do not include data taken from other components or subsystems of the engineered system. As such, these approached may miss valuable latent information encoded in sensors throughout the system that capture environment and other external impacts. Thus, current machine learning techniques may not sufficiently detect degraded components and/or subsystems in the context of the entire engineered system. Other disadvantages may exist.

US2019/0147670A1, in accordance with its abstract, discloses a method including receiving a plurality of data streams acquired for a respective parameter of a plurality of parameters indicating an operating condition of the aircraft, selecting at least one data stream corresponding to at least one parameter of the respective plurality of parameters, selecting a portion of data from the at least one data stream, comparing the portion of data to a model determined for the at least one parameter based on historical data, determining that a failure has occurred or is likely to occur during operation of the aircraft based on the comparing, and transmitting aircraft health monitoring information indicative of occurrence or likelihood of occurrence of the failure. US2017/0331844A1, in accordance with its abstract, discloses a method of assessing structural health including receiving an anomaly detector, receiving an anomaly detection threshold, and receiving a strain measurement for a structure of interest.

### SUMMARY

According to one aspect of the present disclosure, a method is defined by independent claim 1. Further embodiments are defined by dependent claims 2 to 9.

According to another aspect of the present disclosure, a system is defined by independent claim 10. Further embodiments are defined by dependent claims 11 to 14.

According to another aspect of the present disclosure, a memory capable of storing data and processor instructions is defined by independent claim 15.

### BRIEF DESCRIPTION OF THE DRAWINGS

FIG. 1 is a block diagram depicting an example of a system for training a predictive model for sensing degraded components in an engineered system.
FIG. 2 is a block diagram depicting an example of a system for using a predictive model to predict a normal operational behavior associated with a component of an engineered system.
FIG. 3 is a block diagram depicting an example of a system for detecting a degraded component of an engineered system.
FIG. 4 is a flow diagram depicting an example of a method for training a predictive model.
FIG. 5 is a flow diagram depicting an example of a method for detecting a degraded component of an engineered system.

While the disclosure is susceptible to various modifications and alternative forms, specific examples have been in the drawings and will be described in detail herein. However, it should be understood that the disclosure is not intended to be limited to the particular forms disclosed. Rather, the intention is to cover all modifications, equivalents and alternatives falling within the scope of the disclosure.

### DETAILED DESCRIPTION

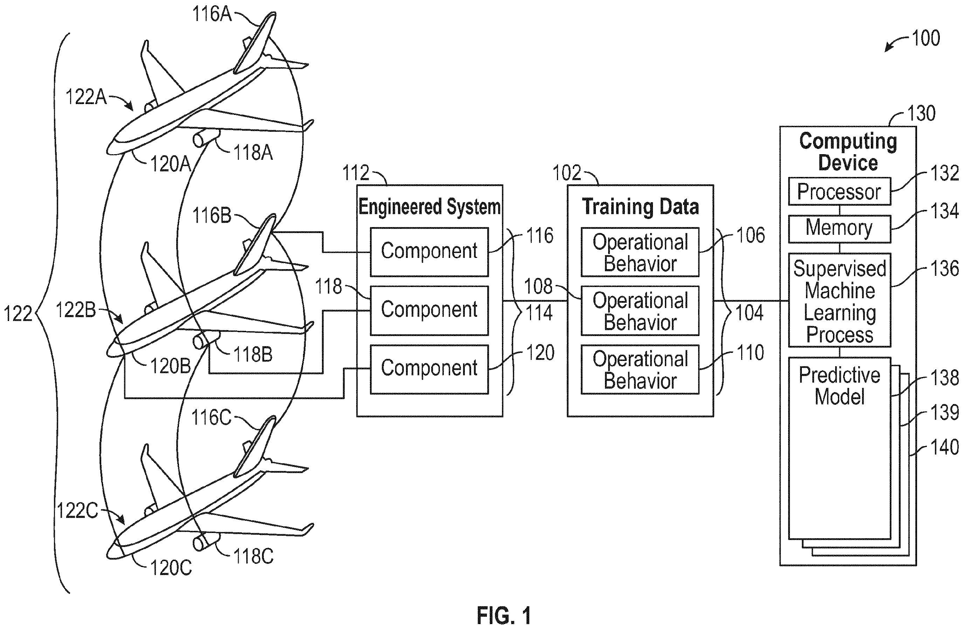

Referring to FIG. 1, an example of a system 100 for training a predictive model 138 for sensing degraded components in an engineered system 112 is depicted. The engineered system 112 includes a set of components 114 having a first component 116, a second component 118, and a third component 120. While three components are depicted for illustrative purposes, it should be understood that in practice, the set of components 114 may include more or fewer than three. In most practical application, the set of components 114 may include numerous components.

The engineered system 112 may correspond to a vehicle, such as an aircraft. For example, FIG. 1 depicts a fleet of aircraft 122 including a first aircraft 122A, a second aircraft 122B, and a third aircraft 122C. Each of the aircraft 122A-C may be of the same type and include the same components as each other. As such, each of the aircraft 122A-C may correspond to the engineered system 112.

To illustrate, the first aircraft 122A may include a first component 116A that corresponds to the first component 116, a second component 118A that correspond to the second component 118, and a third component 120Athat corresponds to the third component 120. Likewise, the second aircraft 122B may include a first component 116B that corresponds to both the first component 116A and the first component 116, a second component 118B that correspond to both the second component 118A and the second component 118, and a third component 120B that corresponds to both the third component 120A and the third component 120. Finally, the third aircraft 122C may include: a first component 116C that corresponds to the first component 116A, the first component 116B, and the first component 116; a second component 118C that correspond to the second component 118A, the second component 118B, and the second component 118; and a third component 120C that corresponds to the third component 120A, the third component 120B, and the third component 120.

Each of the components 116, 118, 120 may continually produce data during a flight. For example, the set of components 114 may include a set of user input devices (e.g., flight controls, user prompts, audio and video recordings, etc.), a set of machines (e.g., control surfaces, engine systems, motors, etc.), a set of measurement sensors (e.g., pressure sensors, temperature sensors, etc.), or combinations thereof. When produced in large quantities, the data produced by the set of components 114 may be used as training data 102.

The training data 102 represents a set of operational behaviors 104 associated respectively with the set of components 114 that make up the engineered system 112. For example, the training data 102 may represent a first operational behavior 106 associated with the first component 116, a second operational behavior 108 associated with the second component 118, and a third operational behavior 110 associated with the third component 120. Because the training data 102 is continuously collected during normal operation of the engineered system 112, the set of operational behaviors 104 may include, with few exceptions, nominal behaviors suitable for training the predictive model 138. It should be noted that some off-nominal data in the training data stream is expected. However, given the large amounts of data received, the off-nominal data may not rise to a level of significance. Thus, the disclosed system 100 may be a robust solution capable of accepting training data with such "noise." Further, because the training data 102 may be collected over the fleet of aircraft 122, the set of operational behaviors 104 may describe nominal behaviors in the context of the fleet of aircraft 122 as opposed to any individual aircraft of the fleet of aircraft 122.

The system 100 may include a computing device 130 configured to train the predictive model 138. The computing device 130 may include a processor 132 and a memory 134. The processor 132 may include a central processing unit (CPU), a graphical processing unit (GPU), a digital signal processor (DSP), a peripheral interface controller (PIC), or another type of microprocessor. It may be implemented as an integrated circuit, a field programmable gate array (FPGA), an application specific integrated circuit (ASIC), a combination of logic gate circuitry, other types of digital or analog electrical design components, or the like, or combinations thereof. In some examples, the processor 132 may be distributed across multiple processing elements, relying on distributive processing operations.

Further, the computing device 130 may include memory 134 such as random-access memory (RAM), read-only memory (ROM), magnetic disk memory, optical disk memory, flash memory, another type of memory capable of storing data and processor instructions, or the like, or combinations thereof. In some examples, the memory, or portions thereof, may be located externally or remotely from the rest of the computing device 130. The memory 134 may store instructions that, when executed by the processor 132, cause the processor 132 to perform operations. The operations may correspond to any operations described herein. In particular, the operations may correspond to training the predictive model 138.

The processor 132 and the memory 134 may be used together to implement a supervised machine learning process 136 to generate the predictive model 138. The predictive model 138 may include any artificial intelligence model usable to categorize operational behaviors as normal or anomalous. For example, the predictive model 138 may include decision trees, association rules, other types of machine learning classification processes, or combinations thereof. It may be implemented as support vector machine networks, Bayesian networks, neural networks, other types of machine learning classification network systems, or combinations thereof.

During operation, the training data 102 may be received from multiple system implementations. For illustration purposes, FIG. 1 depicts the training data 102 as being received from the fleet of aircraft 122, or from any single aircraft 122A, 122B, 122C within the fleet of aircraft 122, depending on whether the engineered system 112 is to be analyzed at a fleet level or at an individual aircraft level. Although FIG. 1 depicts aircraft, it should be understood that the engineered system may correspond to any type of mechanical or electrical system, and not just aircraft. The predictive model 138 may then be trained through the supervised machine learning process 136 using the training data 102. Because the set of operational behaviors 104 may include, for the most part, nominal behaviors of the set of components 114, the predictive model 138 is configured to distinguish between normal operational behaviors and anomalous operational behaviors for the first component 116. Beneficially, the predictions may be based not only on the first operational behavior 106 associated with the first component 116, but also on the other operational behaviors 108, 110 that are not associated with component 116, but which may be relevant as the second component 118 and third component 120 interact with the first component 116 within the engineered system 112. In a like manner, a second predictive model 139 is generated to distinguish between normal and anomalous operational behaviors of the second component 118, and a third predictive model 140 may be generated to distinguish between normal and anomalous operational behaviors of the third component 120.

By training the predictive model 138 based on the training data 102 that represents other operational behaviors 108, 110 of other components 118, 120, in additional to the first operational behavior 106 of the first component 116, the predictive model 138 may be configured to take into account the engineered system 122 as a whole in determining whether the first component 116 is operating in a normal or anomalous way. Similar benefits exist for the second predictive model 139 and the third predictive model 140. Other advantages may exist.

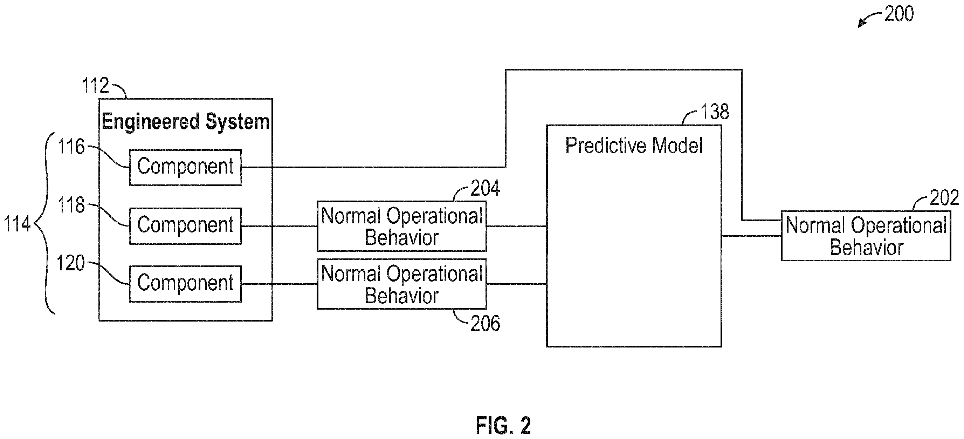

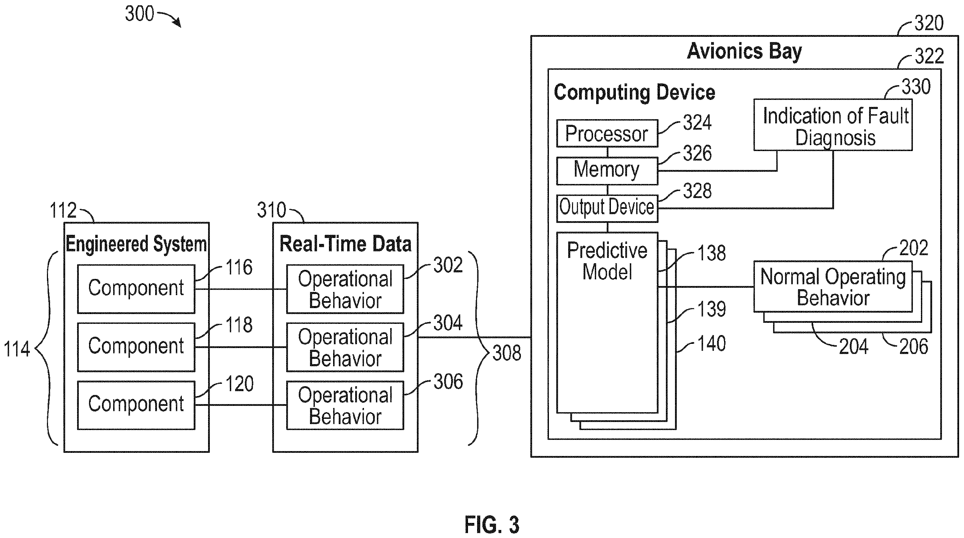

Referring to FIG. 2, an example of a system 200 for using a predictive model 138 to predict a first normal operational behavior 202 associated with a component 116 of an engineered system 112 is depicted. Once the predictive model 138 is trained, as described with reference to FIG. 1, it is used to predict the first normal operational behavior 202 of the first component 116. For example, a second normal operating behavior 204 of the second component 118 and a third normal operational behavior 206 of the third component 120 may be input into the predictive model 138. Based on the second normal operating behavior 204 and the third normal operational behavior 206, the predictive model 138 may determine or predict the first normal operational behavior 202 of the first component 116. As explained further with respect to FIG. 3, the predicted first normal operational behavior 202 may be compared to an actual behavior of the component 116 to determine whether the component 116 is behaving normally or anomalously. Although FIG. 2 is directed to predicting the first normal operational behavior 202 of the first component 116, the second predictive model 139 may be used in a similar fashion to predict the second normal operational behavior 204 of the second component 118 based on the first normal operational behavior 202 and the third normal operational behavior 206, and the third predictive model 140 may be used in a similar fashion to predict the third normal operational behavior 206 of the third component 120 based on the first normal operational behavior 202 and the second normal operational behavior 204.

Referring to FIG. 3, an example of a system 300 for detecting a degraded component of an engineered system 112 is depicted. The system 300 may include the engineered system 112 with the set of components 114 and a computing device 322. In the case where the engineered system 112 is an aircraft, the computing device 322 may be positioned within an avionics bay 320 of the aircraft. Alternatively, the computing device 322 may be ground-based and may be used for post-flight processing.

The computing device 322 may include a processor 324, a memory 326, and an output device 328. The processor 324 may include a central processing unit (CPU), a graphical processing unit (GPU), a digital signal processor (DSP), a peripheral interface controller (PIC), or another type of microprocessor. It may be implemented as an integrated circuit, a field programmable gate array (FPGA), an application specific integrated circuit (ASIC), a combination of logic gate circuitry, other types of digital or analog electrical design components, or the like, or combinations thereof. In some examples, the processor 324 may be distributed across multiple processing elements, relying on distributive processing operations.

The memory 326 may include random-access memory (RAM), read-only memory (ROM), magnetic disk memory, optical disk memory, flash memory, another type of memory capable of storing data and processor instructions, or the like, or combinations thereof. In some examples, the memory 326, or portions thereof, may be located externally or remotely from the rest of the computing device 322. The memory 326 may store instructions that, when executed by the processor 324, cause the processor 324 to perform operations. The operations may correspond to any operations described herein. In particular, the operations may correspond to using the predictive model 138 for detecting a fault with one of the components 116, 118, 120.

The output device 328 may include any device capable of communicating with users or devices external to the computing device 322. For example, the output device 328 may include a user output device, such as an indicator light, a display screen, a speaker, etc. The output device 328 may also include a network output device, such as a serial communication device, a network card, etc.

The predictive models 138, 139, 140 may be stored at the computing device 322, either at the memory 326 or in another form. Based on outcomes of using the predictive models 138, 139, 140, an indication of fault diagnosis (e.g. fault detection) 330 may be generated as described herein. The output device 328 is configured to communicate the indication of fault diagnosis 330 to a user or to another device.

During operation, the engineered system 112 generates real-time data 310 including a set of real-time operational behaviors 308. As used herein, the term "real-time" means that the real-time data 310 corresponds to a currently occurring operation (such as a flight that is currently occurring) or to a most recent operation (such as the most recent flight taken by an aircraft). In particular, the concept of "real-time" is intended to take into account delays with accessing data. The set of real-time operational behaviors 308 may include a first real-time operational behavior associated with the first component 116, a second real-time operational behavior associated with the second component 118, and a third real-time operational behavior associated with the third component 120.

The computing device 322 receives real-time data 310. Based on the real-time data 310, the processor 324 categorizes the first real-time operational behavior 302 associated with the component 116 as normal or anomalous based on the predictive model 138. For example, the predictive model 138 may calculate a normal operating behavior 202 for the first component 116. The first normal operating behavior 202 may be compared to the first real-time operational behavior 302 to determine whether the first real-time operational behavior 302 is anomalous. In response to categorizing the first real-time operational behavior 302 as anomalous, the processor 324 generates the indication of fault diagnosis 330. In some examples, the categorization of the first real-time operational behavior 302 may occur during a flight.

Similar calculations are made to determine whether the second real-time operational behavior 304 and/or the third real-time operational behavior 306 are anomalous. For example, the second predictive model 139 may calculate a second normal operational behavior 204 associated with the second component 118 and the third predictive model 140 may calculate a third normal operating behavior 206 associated with the third component 120. Thus, for each of the components 116, 118, 120, the corresponding normal operational behaviors 202, 204, 206 may be calculated based on the other operational behaviors of the real-time set of operational behaviors 308. If any operational behavior of the set of real-time operational behaviors 308 is anomalous, then the indication of fault diagnosis 330 is generated, indicating which of the components 116, 118, 120 is operating anomalously.

By using the predictive models 138-140 that classify the real-time data 310 based on the real-time operational behaviors 302, 304, 306 of each of the components 116, 118, 120, the system 300 may detect degraded components and/or subsystems in the context of the entire engineered system, as opposed to a behavior of a single component. As such, the system 300 may detect anomalous behavior that other detection systems may miss. Other benefits may exist.

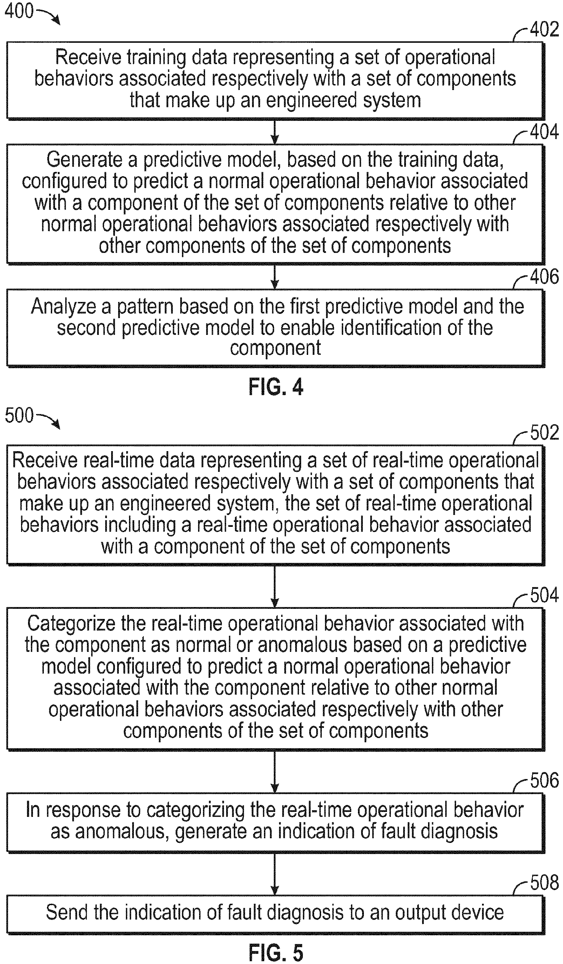

Referring to FIG. 4, an example of a method 400 for training a predictive model is depicted. The method 400 includes receiving training data representing a set of operational behaviors associated respectively with a set of components that make up an engineered system, at 402. For example, the training data 102 may be received at the computing device 130.

The method 400 further includes generating a predictive model, based on the training data, configured to predict a normal operational behavior associated with a component of the set of components relative to other normal operational behaviors associated respectively with other components of the set of components, at 404. For example, the predictive models 138, 139, 140 may be generated to predict normal operational behaviors associated with the components 116, 118, 120 relative to the engineered system 112 as a whole in order to diagnose degradation within the engineered system 112, which may be related to components other than those modeled by the predictive models 138, 139, 140. The method 400 also includes analyzing a pattern based on the first predictive model and the second predictive model to enable identification of the component, at 406. By analyzing patterns associated with which of the predictive models 138, 139, 140 indicate anomaly and which indicate normalcy, it may be determined which subsystem, and even which component within the subsystem, may be a root cause of the anomalous behavior. In other words, a degraded part that requires replacing may be discovered.

Thus, by generating a predictive model configured to predict a normal operational behavior associated with a component relative to other normal operational behaviors associated respectively with other components of an engineered system, the method 400 may take into account an engineered system as a whole in determining whether operation of a component is normal or anomalous. Other advantages may exist.

Referring to FIG. 5, an example of a method 500 for detecting a degraded component of an engineered system is depicted. The method 500 includes receiving real-time data representing a set of real-time operational behaviors associated respectively with a set of components that make up an engineered system, the set of real-time operational behaviors including a real-time operational behavior associated with a component of the set of components, at 502. For example, the real-time data 310 may be received by the computing device 322.

The method 500 further includes categorizing the real-time operational behavior associated with the component as normal or anomalous based on a predictive model configured to predict a normal operational behavior associated with the component relative to other normal operational behaviors associated respectively with other components of the set of components, at 504. For example, the first real-time operational behavior 302 may be categorized by the predictive model 138.

The method 500 also includes, in response to categorizing the real-time operational behavior as anomalous, generating an indication of fault diagnosis, at 506. The processor 324 generates the indication of fault diagnosis 330.

The method 500 may include sending the indication of fault diagnosis to an output device, at 508. For example, the indication of fault diagnosis 330 may be sent to the output device 328 for output.

By categorizing the real-time operational behavior associated with the component as normal or anomalous based on a predictive model configured to predict a normal operational behavior associated with the component relative to other normal operational behaviors associated respectively with other components of the set of components, the method 400 may detect degraded components and/or subsystems in the context of the entire engineered system, as opposed to a behavior of a single component. Other benefits may exist.

## Claims

1. A method comprising:
receiving (402) training data (102) representing a set of operational behaviors (104) associated respectively with a set of components (114) that make up an engineered system (112);
generating (404) a predictive model (138), based on the training data (102), configured to predict a normal operational behavior (202) associated with a component (116) of the set of components (114) relative to other normal operational behaviors (204, 206) associated respectively with other components (118, 120) of the set of components (114);
receiving (502) real-time data (310) representing a set of real-time operational behaviors (308) associated respectively with the set of components (114), the set of real-time operational behaviors (308) including a real-time operational behavior (302) associated with the component (116);
categorizing (504) the real-time operational behavior (302) associated with the component (116) as normal or anomalous based on the predictive model ( 138); and
in response to categorizing the real-time operational behavior (302) as anomalous, generating (506) an indication of fault diagnosis (330);
the method further comprising:
generating a second predictive model (139), based on the training data (102), configured to predict a second normal operational behavior (204) associated with a second component (118) of the set of components (114) relative to the other operational behaviors (202, 206) associated respectively with the other components (116, 120) of the set of components (114), wherein the set of real-time operational behaviors (308) includes a second real-time operational behavior (304) of the second component (118);
categorizing the second real-time operational behavior (304) associated with the second component (118) as normal or anomalous; and
in response to categorizing the second real-time operational behavior (304) as anomalous, generating the indication of fault diagnosis (330),
wherein the set of components (114) includes a set of measurement sensors; and
whereby the method further comprises analyzing a pattern based on the first predictive model and the second predictive model to enable identification of the component, wherein the indication of fault diagnosis identifies the component.

2. The method of claim 1, wherein the set of components includes vehicle components (116A-C, 118A-C, 120A-C), and wherein the engineered system is a vehicle (122A-C).

3. The method of any of claims 1-2, wherein the set of components includes aircraft components (116A-C, 118A-C, 120A-C), and wherein the engineered system is an aircraft (122A-C).

4. The method of any of claims 1-3, wherein the training data is received from multiple aircraft (122A, 122B, 122C) of a fleet of aircraft (122).

5. The method of any of claims 3-4, wherein categorizing the real-time operational behavior (302) associated with the component (116) is performed at a processor (324) within an avionics bay (320) of the aircraft (122A-C) while the aircraft (122A-C) is in flight.

6. The method of any of claims 1-5, wherein generating the predictive model (138) comprises training the predictive model (138) through a supervised machine learning process (136) using the training data (102).

7. The method of any of claims 1-6, wherein the set of operational behaviors (104) of the training data (102) include both nominal and off-nominal operational behaviors.

8. The method of any of claims 1-7, wherein the set of real-time operational behaviors (308) includes sets of user inputs, sets of machine states, sets of measurements, or combinations thereof.

9. The method of any of claims 1-8, further comprising:
sending (508) the indication of fault diagnosis (330) to an output device (328).

10. A system (300) comprising:
a set of components (114) that make up an engineered system (112) configured to generate real-time data (310) representing a set of real-time operational behaviors (308) associated respectively with the set of components (114), wherein the set of components (114) includes a set of measurement sensors;
a computer implemented predictive model (138) and a second predictive model configured to predict a normal operational behavior (202) associated with a component (116), respectively second component, of the set of components (114) relative to other normal operational behaviors (204, 206) associated respectively with other components (118, 112) of the set of components (114);
a processor (324) configured to receive the set of real-time operational behaviors (308), the set of real-time operational behaviors (308) including a real-time operational behavior (302) associated with the component (116) and with the second component, and to categorize the real-time operational behavior (302) associated with the component (116) and with the second component as normal or anomalous based on the predictive model (138), the processor being further configured to analyze a pattern based on the computer implemented predictive model and the second predictive model to enable identification of the component; and
an output device (328) configured to output an indication of fault diagnosis (330) in response to the processor (324) categorizing the real-time operation behavior (302) as anomalous, wherein the indication of fault diagnosis identifies the component.

11. The system of claim 10, further comprising:
a second processor (132) configured to receive training data (102) representing a set of operational behaviors (106, 108, 110) associated respectively with the set of components (116, 118, 120) and to generate the predictive model (138) based on the training data (102).

12. The system of claim 11, whereby the processor and the second processors are configured to operate according to any one of method claims 1 to 9.

13. The system of any of claims 10 to 12, whereby the set of measurement sensors comprises a pressure sensor.

14. The system of any of claims 10 to 13, whereby the set of measurement sensors comprises a temperature sensor.

15. A memory (134) capable of storing data and processor instructions, the memory storing instructions that, when executed by a processor (132), cause the processor to perform operations according to the method of any of claims 1 to 9.

## Patentansprüche

1. Verfahren, umfassend:
Empfangen (402) von Trainingsdaten (102), die einen Satz von Betriebsverhaltensweisen (104) darstellen, die jeweils einem Satz von Komponenten (114) zugeordnet sind, die ein technisches System (112) bilden;
Generieren (404) eines Vorhersagemodells (138) basierend auf den Trainingsdaten (102), das zum Vorhersagen eines normalen Betriebsverhaltens (202), das einer Komponente (116) des Satzes von Komponenten (114) zugeordnet ist, in Bezug auf andere normale Betriebsverhaltensweisen (204, 206), die jeweils anderen Komponenten (118, 120) des Satzes von Komponenten (114) zugeordnet sind, konfiguriert ist;
Empfangen (502) von Echtzeitdaten (310), die einen Satz von Echtzeit-Betriebsverhaltensweisen (308) darstellen, die jeweils dem Satz von Komponenten (114) zugeordnet sind, wobei der Satz von Echtzeit-Betriebsverhaltensweisen (308) eine Echtzeit-Betriebsverhaltensweise (302) umfasst, die der Komponente (116) zugeordnet ist;
Einstufen (504) der Echtzeit-Betriebsverhaltensweise (302), die der Komponente (116) zugeordnet ist, als normal oder anormal, basierend auf dem Vorhersagemodell (138); und
Generieren (506) einer Angabe der Fehlerdiagnose (330) als Reaktion auf die Einstufung der Echtzeit-Betriebsverhaltensweise (302) als anormal;
wobei das Verfahren ferner umfasst:
Generieren eines zweiten Vorhersagemodells (139) basierend auf den Trainingsdaten (102), das zum Vorhersagen einer zweiten normalen Betriebsverhaltensweise (204), die einer zweiten Komponente (118) des Satzes von Komponenten (114) zugeordnet ist, in Bezug auf die anderen Betriebsverhaltensweisen (202, 206), die jeweils den anderen Komponenten (116, 120) des Satzes von Komponenten (114) zugeordnet sind, konfiguriert ist, wobei der Satz von Echtzeit-Betriebsverhaltensweisen (308) eine zweite Echtzeit-Betriebsverhaltensweise (304) der zweiten Komponente (118) umfasst;
Einstufen der zweiten Echtzeit-Betriebsverhaltensweise (304), die der zweiten Komponente (118) zugeordnet ist, als normal oder anormal; und
Generieren der Angabe der Fehlerdiagnose (330) als Reaktion auf die Einstufung der zweiten Echtzeit-Betriebsverhaltensweise (304) als anormal,
wobei der Satz von Komponenten (114) einen Satz von Messsensoren umfasst; und
wobei das Verfahren ferner das Analysieren eines Musters basierend auf dem ersten Vorhersagemodell und dem zweiten Vorhersagemodell umfasst, um die Identifizierung der Komponente zu ermöglichen, wobei die Angabe der Fehlerdiagnose die Komponente identifiziert.

2. Verfahren nach Anspruch 1, wobei der Satz von Komponenten Fahrzeugkomponenten (116A-C, 118A-C, 120A-C) umfasst und wobei das technische System ein Fahrzeug (122A-C) ist.

3. Verfahren nach einem der Ansprüche 1-2, wobei der Satz von Komponenten Flugzeugkomponenten (116A-C, 118A-C, 120A-C) umfasst und wobei das technische System ein Flugzeug (122A-C) ist.

4. Verfahren nach einem der Ansprüche 1-3, wobei die Trainingsdaten von mehreren Flugzeugen (122A, 122B, 122C) einer Flotte von Flugzeugen (122) empfangen werden.

5. Verfahren nach einem der Ansprüche 3-4, wobei das Einstufen der Echtzeit-Betriebsverhaltensweise (302), die der Komponente (116) zugeordnet ist, an einem Prozessor (324) in einer Bordelektronikanlage (320) des Flugzeugs (122A-C) durchgeführt wird, während sich das Flugzeug (122A-C) im Flug befindet.

6. Verfahren nach einem der Ansprüche 1-5, wobei das Generieren des Vorhersagemodells (138) das Trainieren des Vorhersagemodells (138) durch einen überwachten maschinellen Lernprozess (136) unter Verwendung der Trainingsdaten (102) umfasst.

7. Verfahren nach einem der Ansprüche 1-6, wobei der Satz von Betriebsverhaltensweisen (104) der Trainingsdaten (102) sowohl nominelle als auch nichtnominelle Betriebsverhaltensweisen umfasst.

8. Verfahren nach einem der Ansprüche 1-7, wobei der Satz von Echtzeit-Betriebsverhaltensweisen (308) Sätze von Benutzereingaben, Sätze von Maschinenzuständen, Sätze von Messungen oder Kombinationen davon umfasst.

9. Verfahren nach einem der Ansprüche 1-8, ferner umfassend:
Senden (508) der Angabe der Fehlerdiagnose (330) an eine Ausgabevorrichtung (328).

10. System (300), aufweisend:
einen Satz von Komponenten (114), die ein technisches System (112) bilden, das zum Generieren von Echtzeitdaten (310) konfiguriert ist, die einen Satz von Echtzeit-Betriebsverhaltensweisen (308) darstellen, die jeweils dem Satz von Komponenten (114) zugeordnet sind, wobei der Satz von Komponenten (114) einen Satz von Messsensoren umfasst;
ein computerimplementiertes Vorhersagemodell (138) und ein zweites Vorhersagemodell, die zum Vorhersagen einer normalen Betriebsverhaltensweise (202), die einer Komponente (116) bzw. einer zweiten Komponente des Satzes von Komponenten (114) zugeordnet ist, in Bezug auf andere normale Betriebsverhaltensweisen (204, 206), die jeweils anderen Komponenten (118, 112) des Satzes von Komponenten (114) zugeordnet sind, konfiguriert sind;
einen Prozessor (324), der zum Empfangen des Satzes von Echtzeit-Betriebsverhaltensweisen (308) konfiguriert ist, wobei der Satz von Echtzeit-Betriebsverhaltensweisen (308) eine Echtzeit-Betriebsverhaltensweise (302) umfasst, die der Komponente (116) und der zweiten Komponente zugeordnet ist, und zum Einstufen der der Komponente (116) und der zweiten Komponente zugeordneten Echtzeit-Betriebsverhaltenweise (302) basierend auf dem Vorhersagemodell (138) als normal oder anormal konfiguriert ist, wobei der Prozessor ferner zum Analysieren eines Musters basierend auf dem computerimplementierten Vorhersagemodell und dem zweiten Vorhersagemodell konfiguriert ist, um die Identifizierung der Komponente zu ermöglichen; und
eine Ausgabevorrichtung (328), die zum Ausgeben einer Angabe der Fehlerdiagnose (330) als Reaktion darauf konfiguriert ist, dass der Prozessor (324) die Echtzeit-Betriebsverhaltensweise (302) als anormal einstuft, wobei die Angabe der Fehlerdiagnose die Komponente identifiziert.

11. System nach Anspruch 10, ferner aufweisend:
einen zweiten Prozessor (132), der zum Empfangen von Trainingsdaten (102), die einen Satz von Betriebsverhaltensweisen (106, 108, 110) darstellen, die jeweils dem Satz von Komponenten (116, 118, 120) zugeordnet sind, und zum Generieren des Vorhersagemodells (138) basierend auf den Trainingsdaten (102) konfiguriert ist.

12. System nach Anspruch 11, wobei der Prozessor und der zweite Prozessor zum Arbeiten nach einem der Verfahrensansprüche 1 bis 9 konfiguriert sind.

13. System nach einem der Ansprüche 10 bis 12, wobei der Satz von Messsensoren einen Drucksensor aufweist.

14. System nach einem der Ansprüche 10 bis 13, wobei der Satz von Messsensoren einen Temperatursensor aufweist.

15. Speicher (134), der in der Lage ist, Daten und Prozessoranweisungen zu speichern, wobei der Speicher Anweisungen speichert, die bei Ausführung durch einen Prozessor (132) den Prozessor veranlassen, Operationen gemäß dem Verfahren nach einem der Ansprüche 1 bis 9 durchzuführen.

## Revendications

1. Procédé comprenant :
la réception (402) de données d'entraînement (102) représentant un ensemble de comportements opérationnels (104) associés respectivement à un ensemble de composants (114) qui constituent un système d'ingénierie (112) ;
la génération (404) d'un modèle prédictif (138), sur la base des données d'entraînement (102), configuré pour prédire un comportement opérationnel normal (202) associé à un composant (116) de l'ensemble de composants (114) par rapport à d'autres composants opérationnels normaux (204, 206) associés respectivement à d'autres composants (118, 120) de l'ensemble de composants (114) ;
la réception (502) de données en temps réel (310) représentant un ensemble de comportements opérationnels en temps réel (308) associés respectivement à l'ensemble de composants (114), l'ensemble de comportements opérationnels en temps réel (308) incluant un comportement opérationnel en temps réel (302) associé au composant (116) ;
la catégorisation (504) du comportement opérationnel en temps réel (302) associé au composant (116) comme normal ou anormal sur la base du modèle prédictif (138) ; et
en réponse à la catégorisation du comportement opérationnel en temps réel (302) comme anormal, la génération (506) d'une indication de diagnostic de défaut (330) ;
le procédé comprenant en outre :
la génération d'un second modèle prédictif (139), sur la base des données d'entraînement (102), configuré pour prédire un second comportement opérationnel normal (204) associé à un second composant (118) de l'ensemble de composants (114) par rapport à d'autres comportements opérationnels (202, 206) associés respectivement aux autres composants (116, 120) de l'ensemble de composants (114), dans lequel l'ensemble de comportements opérationnels en temps réel (308) inclut un second comportement opérationnel en temps réel (304) du second composant (118) ;
la catégorisation du second comportement opérationnel en temps réel (304) associé au second composant (118) comme normal ou anormal ; et
en réponse à la catégorisation du second comportement opérationnel en temps réel (304) comme anormal, la génération de l'indication de diagnostic de défaut (330), dans lequel l'ensemble de composants (114) inclut un ensemble de capteurs de mesure ; et
dans lequel le procédé comprend en outre l'analyse d'un motif sur la base du premier modèle prédictif et du second modèle prédictif pour permettre une identification du composant, dans lequel l'indication de diagnostic de défaut identifie le composant.

2. Procédé selon la revendication 1, dans lequel l'ensemble de composants inclut des composants de véhicule (116A-C, 118A-C, 120A-C), et dans lequel le système d'ingénierie est un véhicule (122A-C).

3. Procédé selon l'une quelconque des revendications 1 à 2, dans lequel l'ensemble de composants inclut des composantes d'aéronef (116A-C, 118A-C, 120A-C), et dans lequel le système d'ingénierie est un aéronef (122A-C).

4. Procédé selon l'une quelconque des revendications 1 à 3, dans lequel les données d'entraînement sont reçues de multiples aéronefs (122A, 122B, 122C) d'une flotte d'aéronefs (122).

5. Procédé selon l'une quelconque des revendications 3 à 4, dans lequel la catégorisation du comportement opérationnel en temps réel (302) associé au composant (116) est réalisée au niveau d'un processeur (324) à l'intérieur d'une baie avionique (320) de l'aéronef (122A-C) pendant que l'aéronef (122A-C) est en vol.

6. Procédé selon l'une quelconque des revendications 1 à 5, dans lequel le modèle prédictif (138) comprend l'entraînement du modèle prédictif (138) par l'intermédiaire d'un processus d'apprentissage automatique supervisé (136) à l'aide des données d'entraînement (102).

7. Procédé selon l'une quelconque des revendications 1 à 6, dans lequel l'ensemble de comportements opérationnels (104) des données d'entraînement (102) inclut à la fois des comportements opérationnels nominaux et non nominaux.

8. Procédé selon l'une quelconque des revendications 1 à 7, dans lequel l'ensemble de comportements opérationnels en temps réel (308) inclut des ensembles d'entrées d'utilisateur, des ensembles d'états de machine, des ensembles de mesures ou des combinaisons de ceux-ci.

9. Procédé selon l'une quelconque des revendications 1 à 8, comprenant en outre : l'envoi (508) de l'indication de diagnostic de défaut (330) à un dispositif de sortie (328).

10. Système (300) comprenant :
un ensemble de composants (114) qui constituent un système d'ingénierie (112) configuré pour générer des données en temps réel (310) représentant un ensemble de comportements opérationnels en temps réel (308) associés respectivement à l'ensemble de composants (114), dans lequel l'ensemble de composants (114) inclut un ensemble de capteurs de mesure ;
un modèle prédictif mis en oeuvre par ordinateur (138) et un second modèle prédictif configuré pour prédire un comportement opérationnel normal (202) associé à un composant (116), respectivement un second composant, de l'ensemble de composants (114) par rapport à d'autres comportements opérationnels normaux (204, 206) associés respectivement à d'autres composants (118, 112) de l'ensemble de composants (114) ;
un processeur (324) configuré pour recevoir l'ensemble de comportements opérationnels en temps réel (308), l'ensemble de comportements opérationnels en temps réel (308) incluant un comportement opérationnel en temps réel (302) associé au composant (116) et au second composant, et pour catégoriser le comportement opérationnel en temps réel (302) associé au composant (116) et au second composant comme normal ou anormal sur la base du modèle prédictif (138), le processeur étant en outre configuré pour analyser un motif sur la base du modèle prédictif mis en oeuvre par ordinateur et du second modèle prédictif pour permettre une identification du composant ; et
un dispositif de sortie (328) configuré pour délivrer une indication de diagnostic de défaut (330) en réponse à la catégorisation, par le processeur (324), du comportement opérationnel en temps réel (302) comme anormal, dans lequel l'indication de diagnostic de défaut identifie le composant.

11. Procédé selon la revendication 10, comprenant en outre :
un second processeur (132) configuré pour recevoir des données d'entraînement (102) représentant un ensemble de comportements opérationnels (106, 108, 110) associés respectivement à l'ensemble de composants (116, 118, 120) et pour générer le modèle prédictif (138) sur la base des données d'entraînement (102).

12. Système selon la revendication 11, dans lequel le processeur et le second processeur sont configurés pour fonctionner conformément au procédé selon l'une quelconque des revendications 1 à 9.

13. Système selon l'une quelconque des revendications 10 à 12, dans lequel l'ensemble de capteurs de mesure comprend un capteur de pression.

14. Système selon l'une quelconque des revendications 10 à 13, dans lequel l'ensemble de capteurs de mesure comprend un capteur de température.

15. Mémoire (134) capable de stocker des données et des instructions de processeur, la mémoire stockant des instructions qui, lorsqu'elles sont exécutées par un processeur (132), amènent le processeur à réaliser des opérations conformément au procédé selon l'une quelconque des revendications 1 à 9.
